(19) Europäisches Patentamt
European Patent Office
Office européen des brevets

(11) **EP 4 757 351 A1**

(12) **EUROPEAN PATENT APPLICATION**
published in accordance with Art. 153(4) EPC

(43) Date of publication:
**10.06.2026 Bulletin 2026/24**

(21) Application number: **24885985.2**

(22) Date of filing: **22.08.2024**

(51) International Patent Classification (IPC):
*H04W 4/029* (2018.01)      *H04W 4/80* (2018.01)
*H04W 4/02* (2018.01)      *G06T 7/20* (2017.01)
*G06N 3/0442* (2023.01)      *G06N 3/0464* (2023.01)
*G08B 21/02* (2006.01)

(52) Cooperative Patent Classification (CPC):
**G06N 3/0442; G06N 3/0464; G06T 7/20;**
**G08B 21/02; H04W 4/02; H04W 4/029; H04W 4/80**

(86) International application number:
**PCT/KR2024/012547**

(87) International publication number:
**WO 2025/095305 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.11.2023 KR 20230149313**
**30.11.2023 KR 20230170667**

(71) Applicants:
• **Samsung Electronics Co., Ltd.**
**Suwon-si, Gyeonggi-do 16677 (KR)**

• **Research & Business Foundation Sungkyunkwan University**
**Gyeonggi-do 16419 (KR)**

(72) Inventors:
• **KANG, Dongwan**
**Suwon-si Gyeonggi-do 16677 (KR)**
• **WOO, Honguk**
**Suwon-si Gyeonggi-do 16419 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE, AND METHOD BY WHICH ELECTRONIC DEVICE CLASSIFYING CATEGORY OF OBJECT BY USING POSITION TRACKING DEVICE**

(57) An electronic device according to one embodiment comprises a memory, a communication module and a processor, wherein the memory can store instructions that, when executed by the processor, cause the electronic device to: be connected through the communication module; collect, at each specified interval, position data capable of tracking the trajectory of an object from a position tracking device attached to the object; change the center point of trajectory data, which includes position data collected at each specified interval; normalize the trajectory data by predicting missing data not collected at the specified intervals; generate, on the basis of the normalized trajectory data, supplementary data corresponding to the missing data; generate, as a trajectory image, the trajectory data including the supplementary data; and classify a category of the object on the basis of a feature extracted from the trajectory image.

FIG. 3

## Description

[Technical Field]

The disclosure relates to an electronic device and a method of classifying a category of an object using a location tracking device in the electronic device.

[Background Art]

Various types of smart tags are being developed for managing or preventing loss of personal belongings, and an electronic device may track personal belongings based on location information received from a smart tag attached to the personal belongings while communication is connected with the smart tag.

The electronic device may stably track the location of personal belongings to which the smart tag is attached while reducing battery consumption of the electronic device by connecting communication with the smart tag using a communication method such as Bluetooth low energy (BLE) or ultra wide band (UWB).

Additionally, by establishing a large-scale crowd-sourced location tracking network, the electronic device may track the location of personal belongings to which the smart tag is attached both indoors and outdoors, and the electronic device may track the location of personal belongings to which the smart tag is attached even in offline circumstances according to an offline-finding function.

[Detailed Description of the Invention]

[Technical Solution]

The electronic device may classify or predict a category of an object based on a trajectory of the object to which a location tracking device is attached, and may provide various functions for each category.

According to an embodiment, an electronic device may include memory, a communication module, and a processor. According to an embodiment, the memory may store instructions capable of, when executed by the processor, causing the electronic device to collect location data capable of tracking a trajectory of an object from a location tracking device connected through the communication module and attached to the object at designated intervals. According to an embodiment, the memory may store instructions capable of, when executed by the processor, causing the electronic device to change a center point of trajectory data including the location data collected at the designated intervals, and normalize the trajectory data by predicting missing data not collected during the designated intervals. According to an embodiment, the memory may store instructions capable of, when executed by the processor, causing the electronic device to generate supplementary data corresponding to the missing data based on the normalized trajectory data.

According to an embodiment, the memory may store instructions capable of, when executed by the processor, causing the electronic device to generate the trajectory data including the supplementary data as a trajectory image. According to an embodiment, the memory may store instructions configured to, when executed by the processor, cause the electronic device to classify a category for the object based on a feature extracted from the trajectory image.

According to an embodiment, a method of classifying a category of an object using a location tracking device in an electronic device may include an operation of collecting location data capable of tracking a trajectory of an object from a location tracking device connected through the communication module of the electronic device and attached to the object at designated intervals. According to an embodiment, the method may include an operation of changing a center point of trajectory data including the location data collected at the designated intervals, and normalizing the trajectory data by predicting missing data not collected during the designated intervals. According to an embodiment, the method may include an operation of generating supplementary data corresponding to the missing data based on the normalized trajectory data. According to an embodiment, the method may include an operation of generating the trajectory data including the supplementary data as a trajectory image. According to an embodiment, the method may include an operation of classifying a category for the object based on a feature extracted from the trajectory image.

According to an embodiment, in a non-volatile storage medium storing instructions, the instructions are configured to, when executed by an electronic device, cause the electronic device to perform at least one operation, and the at least one operation may include an operation of collecting location data capable of tracking a trajectory of an object from a location tracking device connected through a communication module of the electronic device and attached to the object at designated intervals. According to an embodiment, the operation may include an operation of changing a center point of trajectory data including the location data collected at the designated intervals, and normalizing the trajectory data by predicting missing data not collected during the designated intervals. According to an embodiment, the operation may include an operation of generating supplementary data corresponding to the missing data based on the normalized trajectory data. According to an embodiment, the operation may include an operation of generating the trajectory data including the supplementary data as a trajectory image. According to an embodiment, the operation may include an operation of classifying a category for the object based on a feature extracted from the trajectory image.

[Brief Description of Drawings]

FIG. 1 is a block diagram illustrating an electronic device in a network environment according to an embodiment.

FIG. 2 is a view illustrating an operation of receiving location data from a location tracking device attached to an object in an electronic device according to an embodiment.

FIG. 3 is a block diagram illustrating an electronic device according to an embodiment.

FIG. 4 is a view illustrating a time vector predicting missing data in an electronic device according to an embodiment.

FIG. 5 is a graph illustrating a result of supplementing missing data in an electronic device according to an embodiment.

FIGS. 6A and 6B are views illustrating generation of a trajectory image corresponding to trajectory data for a plurality of channels in an electronic device according to an embodiment.

FIG. 7 is a view illustrating a result of non-linearly changing a trajectory image in an electronic device according to an embodiment.

FIG. 8 is a view illustrating an operation capable of classifying a category of an object using an artificial intelligence model in an electronic device according to an embodiment.

FIG. 9 is a view illustrating a UI providing a recommended function according to a category of an object in an electronic device according to an embodiment.

FIG. 10 is a flowchart illustrating an operation of classifying a category of an object to which a location tracking device is attached in an electronic device according to an embodiment.

[Mode for Carrying out the Invention]

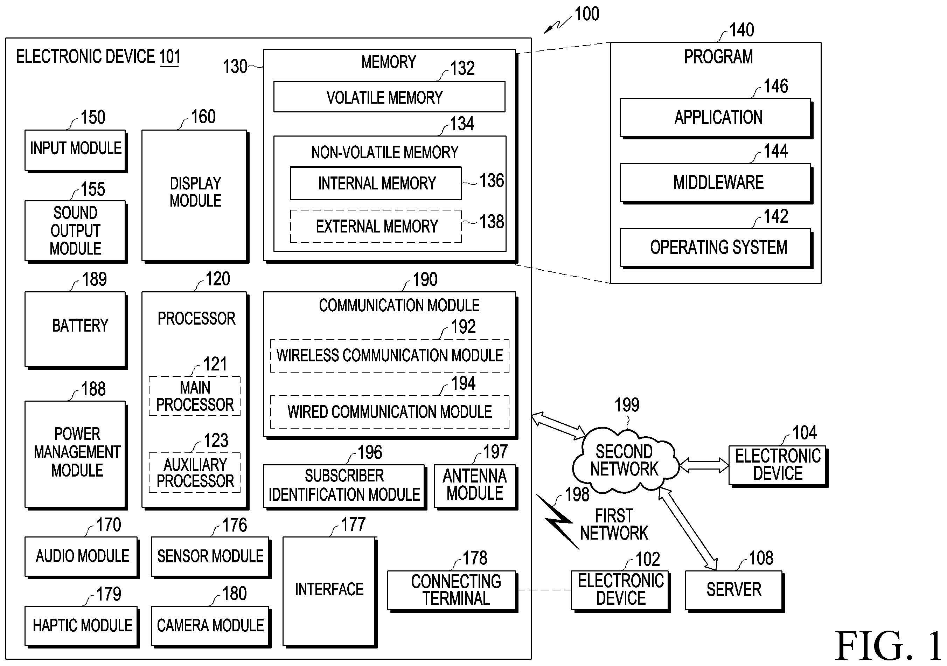

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mm Wave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

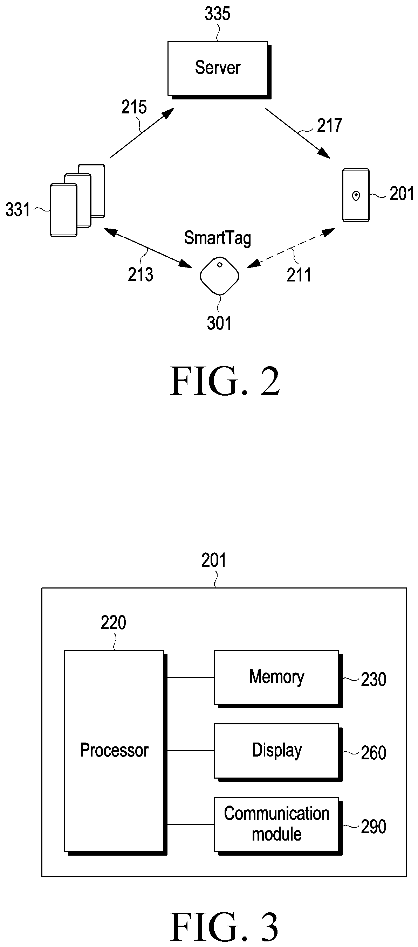

FIG. 2 is a view illustrating an operation of receiving location data from a location tracking device attached to an object in an electronic device according to an embodiment.

Referring to FIG. 2, According to an embodiment, an electronic device 201 may be connected in communication with a location tracking device 301 attached to an object (not illustrated) (211). According to an embodiment, the electronic device 201 may connect communication with the location tracking device 301 using Bluetooth low energy (BLE) communication and/or ultra wide band (UWB) communication. According to an embodiment, the electronic device 201 may collect (receive) location data capable of tracking the trajectory of the object from the location tracking device 301 with which communication is connected at designated intervals. According to an embodiment, the electronic device 201 may collect (receive) encrypted location data of the location tracking device from a server 335 when communication connection to the location tracking device 301 is released and an "offline discovering" function is activated in the electronic device 201 (217). According to an embodiment, the electronic device 201 may identify the location data of the location tracking device by decrypting the encrypted location data of the location tracking device.

According to an embodiment, the location tracking device 301 may be connected in communication with the electronic device 201 (211). According to an embodiment, the location tracking device 301 may connect communication with the electronic device 201 using Bluetooth low energy (BLE) communication and/or ultra wide band (UWB) communication. According to an embodiment, the location tracking device 301 may transmit location data capable of tracking the trajectory of the object to the electronic device 201 with which communication is connected. According to an embodiment, the location tracking device 301 may be attached to various objects such as a companion animal, a bag, a wallet, an automobile, a bicycle, and a motorcycle. According to an embodiment, the location tracking device 301 may include a smart tag.

According to an embodiment, an external elec-

tronic device 331 may encrypt the location data of the external electronic device 331 as the location data of the location tracking device and transmit the same to a server 335 when communication is connected with the location tracking device 301 using Bluetooth low energy (BLE) communication (215).

According to an embodiment, a server 335 may, upon receiving the encrypted location data of the location tracking device 301 from the external electronic device3 301, identify that the location tracking device 301 is registered as a location tracking device of the electronic device 201, and upon identifying that an "offline discovering" function is activated in the electronic device 201, transmit the location data of the location tracking device 301 to the electronic device 201.

FIG. 3 is a block diagram illustrating an electronic device according to an embodiment.

Referring to FIG. 3, an electronic device 201 may include a processor 220, memory 230, a display 260, and a communication module 290.

According to an embodiment, a processor 220 may be implemented to be substantially identical or similar to the processor 120 of FIG. 1.

According to an embodiment, the processor 220 may collect (receive) location data capable of tracking the trajectory of an object from a location tracking device (e.g., the location tracking device 301 of FIG. 2) attached to the object at designated intervals.

According to an embodiment, the processor 220 may collect location data capable of tracking the trajectory of the object from the location tracking device at the designated intervals when communication is connected with the location tracking device through the communication module 290 (e.g., a BLE communication module and/or a ultra wide band (UWB) communication module).

According to an embodiment, the processor 220 may collect the location data of the location tracking device from a server (e.g., the server 335 of FIG. 2) at the designated intervals upon identifying activation of an "offline discovering" function in a state in which communication connection to the location tracking device is released.

According to an embodiment, the processor 220 may make trajectory data into standardized data by changing a center point of the trajectory data including location data collected from a location tracking device (e.g., the location tracking device 301 of FIG. 2) attached to an object at the designated intervals and normalizing the trajectory data by predicting missing data not collected during the designated intervals.

According to an embodiment, when the location data collected from the location tracking device is defined as "P" and the trajectory data including the location data collected at the designated intervals is defined as a continuous sequence "S", it may be represented as the following <Equation 1>.

[Equation 1]

$$P_s = \left(p_{(i)}\right)_{i=1}^{N_s}$$

According to an embodiment, the location data ($P(i)$) collected from the location tracking device may include a plurality of feature values including a timestamp value (timestamp t), a latitude value (latitude lat), a longitudevalue (longitude lng), an accuracy value (accuracy acc) for location information of the electronic device 201 or an external electronic device (e.g., the external electronic device 331 of FIG. 2) with which communication is connected with the location tracking device, a speed value (speed sp), a signal strength value (rssi) between the location tracking device with which communication is connected and the electronic device 201 or the external electronic device (e.g., the external electronic device 331 of FIG. 2), and a value (method mt) indicating a communication connection method between the location tracking device with which communication is connected and the electronic device 201 or the external electronic device (e.g., the external electronic device 301of FIG. 2). The types of the plurality of feature values included in the location data according to an embodiment are described as an example, and are not limited thereto and may additionally include other feature values.

According to an embodiment, the processor 220 may calculate a center point ($center_{lng}$, $center_{lat}$) of trajectory data ($P_s$) through the following <Equation 2> and change the center point of the trajectory data ($P_s$) to a reference center point (e.g., (0,0)) as the trajectory data ($P_s$) has a large deviation in latitude (lat) value and longitude (lng) value and different center points according to the location of the location tracking device.

[Equation 2]

$$center_{lng} = \frac{1}{|P_s|} \sum_{j=1}^{|P_s|} P_{(j)}.lng + min(P_s.lng)$$

$$center_{lat} = \frac{1}{|P_s|} \sum_{j=1}^{|P_s|} P_{(j)}.lat + min(P_s.lat)$$

According to an embodiment, the processor 220 may calculate a time vector ($\delta_s$) capable of predicting missing data not collected from the location tracking device during the designated intervals through the following <Equation 3> and <Equation 4> when the location data of the location tracking device is not collected during the designated intervals because whether the location tracking device is connected in communication with an external electronic device (e.g., the external electronic device 331 of FIG. 2) varies according to the distribution of the external electronic device in a state in which communication connection to the location tracking device is released.

[Equation 3]

$$m^{(i)}.d = \begin{cases} 0 & if\ P_{(i)}.d\ is\ not\ observed \\ 1 & otherwise \end{cases}$$

d may represent the latitude (lat) value, longitude (lng) value, accuracy (acc) value, speed (sp) value, and signal strength (rssi) value of $P_{(i)}$.

[Equation 4]

$$\begin{cases} P_{(i)}.t - P_{(i-1)}.t + \delta^{(i-1)}.t & if\ i > 1, m^{(i-1)}.d = 0 \\ P_{(i)}.t - P_{(i-1)}.t & if\ i > 1, m^{(i-1)}.d = 1 \\ 0 & if\ i = 0 \end{cases}$$

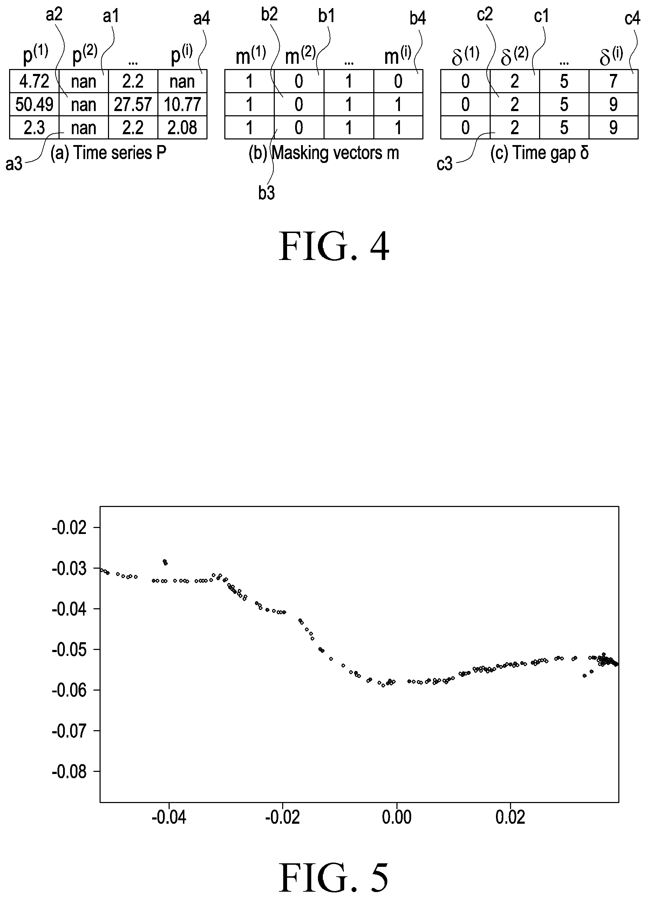

FIG. 4 is a view illustrating a time vector predicting missing data in an electronic device according to an embodiment. Referring to FIG. 4, in (a) according to an embodiment, time series P represents each location information value included in trajectory data ($P_s$), and missing data is indicated as "nan" (a1, a2, a3, a4).

In (b) according to an embodiment, masking Vectors m displays a result value calculated through the <Equation 3>, and missing data is indicated as "0" (b1, b2, b3, b4).

In (c) according to an embodiment, time Gap displays a result value calculated through the <Equation 4>, and occurrence of missing data may be predicted when the Time Gap is "2" (c1, c2, c3) and "7" (c4) through the time vector ($\delta_s$).

According to an embodiment, the processor 220 may predict uncollected missing data ($P_2$) when collecting location data ($P_3$) after exceeding a designated interval (e.g., 5 minutes) after collecting location data ($P_1$) as in (a).

According to an embodiment, the processor 220 may designate or predict an interval for collecting location data for each category of the object.

According to an embodiment, a processor 220 may generate supplementary data corresponding to missing data based on normalized trajectory data.

According to an embodiment, the processor 220 may generate the supplementary data corresponding to the missing data based on the normalized trajectory data using a first artificial intelligence model.

According to an embodiment, the processor 22 may, when inputting normalized trajectory data as input data to the first artificial intelligence model, have the first artificial intelligence model generate the supplementary data corresponding to the missing data as result data.

According to an embodiment, the processor 220 may use at least one of long short-term memory (LSTM) or bi-directional recurrent deep neural network (BRDNN) of a recurrent neural network (RNN) family as the first artificial intelligence model for generating the supplementary data corresponding to the missing data.

FIG. 5 is a graph illustrating a result of supplementing missing data in an electronic device according to an embodiment. In FIG. 5, an empty circle represents location data, and a filled circle represents supplementary data corresponding to missing data generated using the first artificial intelligence model.

According to an embodiment, a processor 220 may generate trajectory data including supplementary data corresponding to missing data as a trajectory image.

According to an embodiment, the processor 220 may generate a pixel value of a trajectory connecting first location data ($P_i$) and second location data ($P_{i+1}$) being a next position of the first location data among the trajectory data.

According to an embodiment, the processor 220 may generate the pixel value of the trajectory through the following <Equation 5>.

[Equation 5]

$$L_{(x,y)} = \alpha\,(P_{i+1}, d)$$

In <Equation 5>, L represents a line segment of $\overrightarrow{P_i \cdot P_{i+1}}$, and one pixel of the line segment may be defined as $L_{(x,y)}$. The pixel value may be determined according to $P_{i+1} \cdot d$, and d may represent an accuracy (acc) value, a speed (sp) value, a signal strength (rssi) value, and a value (mt) indicating a connection method of $P_i$.

According to an embodiment, the processor 220 may generate a trajectory image corresponding to the trajectory data based on a plurality of feature values included in location data and the pixel value.

According to an embodiment, the processor 220 may generate at least one trajectory image corresponding to trajectory data for each channel corresponding to at least some values (e.g., an accuracy (acc) value, a speed (sp) value, a signal strength (rssi) value, and a value (mt) indicating a connection method) among the plurality of feature values included in the location data, and generate a final trajectory image by merging the generated at least one trajectory image.

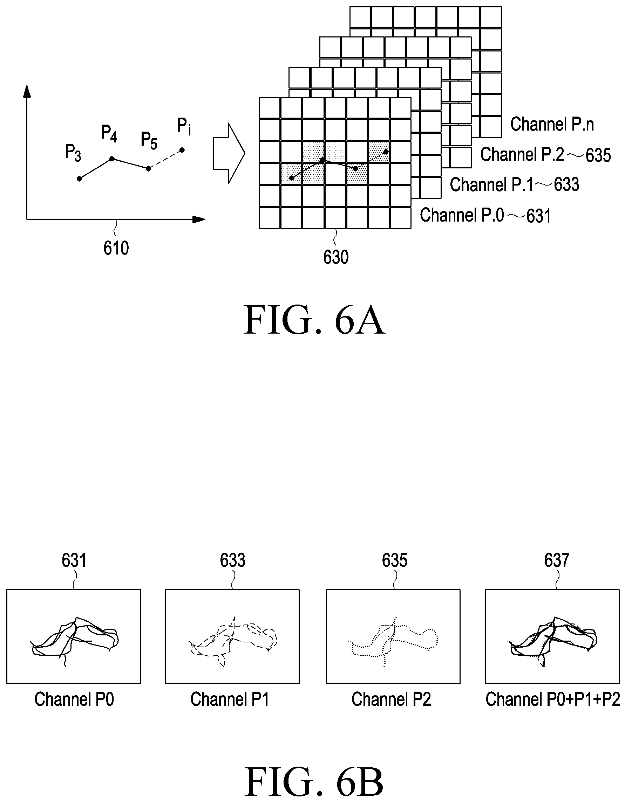

FIGS. 6A and 6B are views illustrating generation of a trajectory image corresponding to trajectory data for a plurality of channels in an electronic device according to an embodiment. Referring to FIGS. 6A and 6B, According to an embodiment, the processor 220 may generate a plurality of trajectory images 630 corresponding to a plurality of channels from trajectory data 610. According to an embodiment, a processor 220 may generate a first trajectory image 631 corresponding to a first channel using an accuracy (acc) value, generate a second trajectory image 633 corresponding to a second channel using a speed (sp) value, and generate a third trajectory image 635 corresponding to a third channel using a signal strength (rssi) value. According to an embodiment, the processor 220 may generate a final trajectory image 637 by merging the first trajectory image 631, the second trajectory image 633, and the third trajectory image 635.

According to an embodiment, the processor 220 may non-linearly change the resolution of the trajectory image.

According to an embodiment, the processor 220 may change the trajectory image represented in a cartesian coordinate system to a polar coordinate system through the following <Equation 6>.

[Equation 6]

$$r = \sqrt{(x^2 + y^2)}$$

$$\theta = \tan^{-1}\left(\frac{y}{x}\right)$$

x, y: $L_{(x,y)}$ coordinate point of trajectory image
r: distance from origin of polar coordinate system to coordinate of trajectory image
Θ: angle between origin of polar coordinate system and coordinate of trajectory image

According to an embodiment, the processor 220 may calculate an (r_u) value by distorting a position of the distance (r) from the origin of the polar coordinate system to the coordinate of the trajectory image through the following <Equation 7>.

[Equation 7]

$$ru = r * (1 + \kappa_1(r^2) + \kappa_2(r^4) + \kappa_3(r^6))$$

$k_1, k_2, k_3$: distortion coefficient

According to an embodiment, the processor 220 may change the polar coordinate system of the trajectory image back to a cartesian coordinate system through the following <Equation 8>.

[Equation 8]

$$L_{(x, y)} = (ru \cos\theta, \ ru \sin\theta)$$

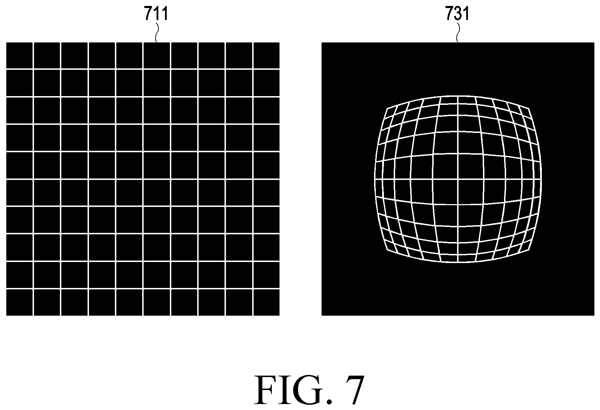

FIG. 7 is a view illustrating a result of non-linearly changing a trajectory image in an electronic device according to an embodiment. When representing the resolution of the trajectory image linearly as in <711>, the resolution of the trajectory image is decreased to alleviate the location data sparsity problem, but a lot of information of the trajectory (e.g., trajectory information of small movement) corresponding to the same pixel may be lost. When representing the resolution of the trajectory image non-linearly as in <731>, a trajectory with a small movement radius may be enlarged, and a trajectory with a large movement radius may be decreased to reduce the resolution of the trajectory image while reducing the deviation in mobility.

According to an embodiment, a processor 220 classify a category for an object to which a location tracking device (e.g., the location tracking device 301 of FIG. 2) is attached based on a feature extracted from the trajectory image.

According to an embodiment, the processor 220 may classify a category for the object based on a feature extracted from the trajectory image using a second artificial intelligence model.

According to an embodiment, the second artificial intelligence model may include a convolutional neural network (CNN).

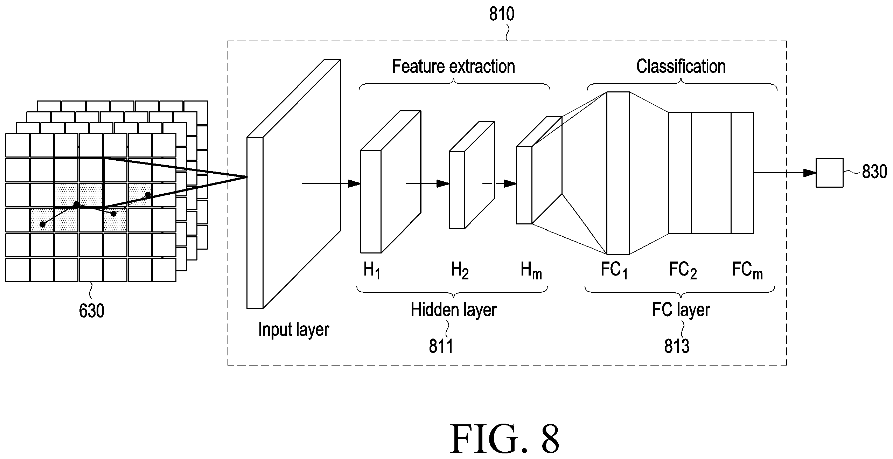

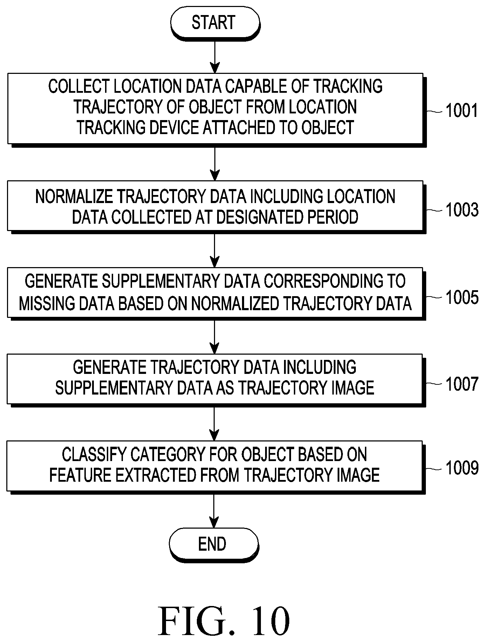

FIG. 8 is a view illustrating an operation capable of classifying a category of an object using an artificial intelligence model in an electronic device according to an embodiment. Referring to FIG. 10, according to an embodiment, the processor 220 when inputting a trajectory image 630 as input data to a second artificial intelligence model (e.g., CNN (convolutional neural network)) 811, have the second artificial intelligence model 811 extract a feature of the object through a Convolution Layer 811 and classify the object through a Fully Connected Layer 813, thereby outputting category information 1030 of the object as result data.

According to an embodiment, a processor 220 provide a recommended function recommendable from the identified category upon identifying a category of the object based on a trajectory of a location tracking device (e.g., the location tracking device 301 of FIG. 2) attached to the object.

According to an embodiment, the processor 220 may, upon identifying a category of the object based on trajectory data of the object to which the location tracking device is attached using the second artificial intelligence model trained to classify a category of the object based on trajectory data, provide a function recommendable from the identified category of the object. For example, the processor 220 may provide a "notify when key goes away" function when the object is a key, and provide a "notify when there is no movement or when going away from home" function as a recommended function when the object is a companion animal.

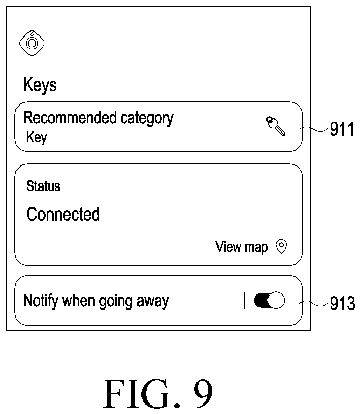

FIG. 9 is a view illustrating a UI providing a recommended function according to a category of an object in an electronic device according to an embodiment.

Referring to FIG. 9, according to an embodiment, a processor 220 may, when identifying the category of the object as "key" (911) based on trajectory data collected from a location tracking device (e.g., the location tracking device 301 of FIG. 2) attached to the object, provide a UI providing a "notify when key goes away" function as a recommended function 913.

According to an embodiment, memory 230 may be implemented to be substantially identical or similar to the memory 130 of FIG. 1.

According to an embodiment, the memory 230 may store trajectory data including location data collected at the designated intervals from a location tracking device (e.g., the location tracking device 301 of FIG. 2) attached to an object.

According to an embodiment, the memory 230 may store at least one trajectory image corresponding to the trajectory data.

According to an embodiment, the memory 230 may store trajectory data corresponding to each category of the object.

According to an embodiment, the memory 230 may store a recommended function for each category of the object.

According to an embodiment, the memory 230 may store data or instructions of the electronic device 201. For example, the instructions stored in the memory 230 may be configured to perform specific operations by the processor 220.

According to an embodiment, a display 260 may be implemented to be substantially identical or similar to the display 160 of FIG. 1.

According to an embodiment, the display 260 may, upon identifying a category of the object based on trajectory data of the object to which a location tracking device (e.g., the location tracking device 301 of FIG. 2) is attached, display a function recommendable from the identified category of the object as a UI.

According to an embodiment, a communication module 290 may be implemented to be substantially identical or similar to the communication module 190 of FIG. 1, and may include a plurality of communication circuits using different communication technologies.

According to an embodiment, the communication module 290 may include at least one of a wireless LAN module (not illustrated) and a short-range communication module (not illustrated), and the short-range communication module (not illustrated) may include a ultra wide band (UWB) communication module, a Wi-Fi communication module, an NFC communication module, a Bluetooth legacy communication module, and/or a BLE communication module.

According to an embodiment, an electronic device (e.g., the electronic device 101 of FIG. 1 and/or the electronic device 201 of FIGS. 2 and/or the electronic device 201 of FIG. 3) may include memory (e.g., the memory 130 of FIG. 1 and/or the memory 230 of FIG. 3), a communication module (e.g., the communication module 190 of FIG. 1 and/or the communication module 290 of FIG. 3), and a processor (e.g., the processor 120 of FIG. 1 and/or the processor 220 of FIG. 3). According to an embodiment, the memory may store instructions capable of, when executed by the processor, causing the electronic device to collect location data capable of tracking a trajectory of an object from a location tracking device connected through the communication module and attached to the object at designated intervals. According to an embodiment, the memory may store instructions capable of, when executed by the processor, causing the electronic device to change a center point of trajectory data including the location data collected at the designated intervals, and normalize the trajectory data by predicting missing data not collected during the designated intervals. According to an embodiment, the memory may store instructions capable of, when executed by the processor, causing the electronic device to generate supplementary data corresponding to the missing data based on the normalized trajectory data. According to an embodiment, the memory may store instructions capable of, when executed by the processor, causing the electronic device to generate the trajectory data including the supplementary data as a trajectory image. According to an embodiment, the memory may store instructions configured to, when executed by the processor, cause the electronic device to classify a category for the object based on a feature extracted from the trajectory image.

According to an embodiment, the location data may be configured to include a plurality of feature values including a timestamp value, a latitude value, a longitude value, an accuracy value, a speed value, a signal strength value, and a value indicating a connection method.

According to an embodiment, the memory (e.g., the memory 130 of FIG. 1 and/or the memory 230 of FIG. 3) may, when executed by the processor (e.g., the processor 120 of FIG. 1 and/or the processor 220 of FIG. 3), change the center point of the trajectory data of the electronic device (e.g., the electronic device 101 of FIG. 1 and/or the electronic device 201 of FIGS. 2 and/or the electronic device 201 of FIG. 3) to a reference center point. According to an embodiment, a processor (e.g., the processor 120 of FIG. 1 and/or the processor 220 of FIG. 3) may store instructions capable of configuring the electronic device to normalize the trajectory data by calculating a time vector for predicting missing data not collected from the location tracking device during the designated intervals.

According to an embodiment, the memory (e.g., the memory 130 of FIG. 1 and/or the memory 230 of FIG. 3) may store instructions capable of, when executed by the processor (e.g., the processor 120 of FIG. 1 and/or the processor 220 of FIG. 3), configuring the electronic device (e.g., the electronic device 101 of FIG. 1 and/or the electronic device 201 of FIGS. 2 and/or the electronic device 201 of FIG. 3) to generate the supplementary data corresponding to the missing data based on the normalized trajectory data using a first artificial intelligence model.

According to an embodiment, the memory (e.g., the memory 130 of FIG. 1 and/or the memory 230 of FIG. 3) may store instructions capable of, when executed by the processor (e.g., the processor 120 of FIG. 1 and/or the processor 220 of FIG. 3), generate a pixel value of a trajectory connecting first location data and second location data being a next position of the first location data among the trajectory data of the electronic device (e.g., the electronic device 101 of FIG. 1 and/or the electronic device 201 of FIGS. 2 and/or the electronic device 201 of FIG. 3). According to an embodiment, a processor (e.g., the processor 120 of FIG. 1 and/or the processor 220 of FIG. 3) may generate the trajectory image corresponding to the trajectory data based on the plurality of feature values included in the location data and the pixel value. According to an embodiment, a processor (e.g., the processor 120 of FIG. 1 and/or the processor 220 of FIG. 3) may store instructions capable of configuring the electronic device to non-linearly change the resolution of the trajectory image.

According to an embodiment, the memory (e.g., the memory 130 of FIG. 1 and/or the memory 230 of FIG. 3) store instructions capable of, when executed by the processor (e.g., the processor 120 of FIG. 1 and/or the processor 220 of FIG. 3), configuring the electronic device (e.g., the electronic device 101 of FIG. 1 and/or the electronic device 201 of FIGS. 2 and/or the electronic device 201 of FIG. 3) to generate the pixel value based on an accuracy value, a speed value, a signal strength value, and a value indicating a connection method among the plurality of feature values included in the second location data.

According to an embodiment, the memory (e.g., the memory 130 of FIG. 1 and/or the memory 230 of FIG. 3) store instructions capable of, when executed by the processor (e.g., the processor 120 of FIG. 1 and/or the processor 220 of FIG. 3), configuring the electronic device (e.g., the electronic device 101 of FIG. 1 and/or the electronic device 201 of FIGS. 2 and/or the electronic device 201 of FIG. 3) to generate a plurality of trajectory images based on a plurality of feature values included in each of the location data included in the trajectory data and the pixel value, and generate the trajectory image by merging the plurality of trajectory images.

According to an embodiment, the memory (e.g., the memory 130 of FIG. 1 and/or the memory 230 of FIG. 3) store instructions capable of, when executed by the processor (e.g., the processor 120 of FIG. 1 and/or the processor 220 of FIG. 3), configuring the electronic device (e.g., the electronic device 101 of FIG. 1 and/or the electronic device 201 of FIGS. 2 and/or the electronic device 201 of FIG. 3) to change a Cartesian coordinate system of the trajectory image to a polar coordinate system, distort a distance value between an origin of the polar coordinate system and a coordinate of the trajectory image, and non-linearly change the resolution of the trajectory image by changing the polar coordinate system having the distorted distance value to a Cartesian coordinate system.

According to an embodiment, the memory (e.g., the memory 130 of FIG. 1 and/or the memory 230 of FIG. 3) may store instructions capable of, when executed by the processor (e.g., the processor 120 of FIG. 1 and/or the processor 220 of FIG. 3), configuring the electronic device (e.g., the electronic device 101 of FIG. 1 and/or the electronic device 201 of FIGS. 2 and/or the electronic device 201 of FIG. 3) to classify a category for the object based on a feature extracted from the trajectory image using a second artificial intelligence model.

According to an embodiment, the memory (e.g., the memory 130 of FIG. 1 and/or the memory 230 of FIG. 3) may store instructions capable of, when executed by the processor (e.g., the processor 120 of FIG. 1 and/or the processor 220 of FIG. 3), configuring the electronic device (e.g., the electronic device 101 of FIG. 1 and/or the electronic device 201 of FIGS. 2 and/or the electronic device 201 of FIG. 3) to, upon identifying a category of the object based on a trajectory of a location tracking device attached to the object, provide a function recommendable from the identified category as a recommended function.

FIG. 10 is a flowchart illustrating an operation of classifying a category of an object to which a location tracking device is attached in an electronic device according to an embodiment. The operation of classifying an object to which a location tracking device is attached by category in the device may include operations 1001 to 1009. In the following embodiment, each of the operations may be sequentially performed, but is not necessarily sequentially performed. For example, the order of the operations may be changed, and at least two operations may be performed in parallel or other operations may be added.

In operation 1001, an electronic device (e.g., the electronic device 101 of FIG. 1, the electronic device 201 of FIG. 2, and/or the electronic device 201 of FIG. 3) may collect location data capable of tracking a trajectory of an object from a location tracking device attached to the object.

According to an embodiment, the electronic device may collect (receive) location data capable of tracking the trajectory of the object from a location tracking device (e.g., the location tracking device 301 of FIG. 2) attached to the object at the designated intervals.

According to an embodiment, the electronic device may collect location data capable of tracking the trajectory of the object from the location tracking device at the designated intervals when communication is connected with the location tracking device through a communication module (e.g., the communication module 290 of FIG. 3) of the electronic device (e.g., a BLE communication module and/or a ultra wide band (UWB) communication module).

According to an embodiment, the electronic device may collect the location data of the location tracking device from a server (e.g., the server 335 of FIG. 2) at the designated intervals upon identifying activation of an "offline discovering" function in a state in which communication connection to the location tracking device is released.

In operation 1003, an electronic device (e.g., the electronic device 101 of FIG. 1, the electronic device 201 of FIG. 2, and/or the electronic device 201 of FIG. 3) may normalize trajectory data including location data collected at the designated intervals.

According to an embodiment, the electronic device may normalize the trajectory data by changing a center point of trajectory data including location data collected from a location tracking device (e.g., the location tracking device 301 of FIG. 2) attached to an object at the designated intervals, and predicting missing data not collected during the designated intervals.

According to an embodiment, the electronic device may calculate a center point of trajectory data ($Ps$) through the <Equation 2> and change the center point of the trajectory data ($Ps$) to a reference center point (e.g., (0,0)) as the trajectory data ($Ps$) has a large deviation in latitude (lat) value and longitude (lng) value and different center points according to the location of the location tracking device.

According to an embodiment, the electronic device may calculate a time vector ($\delta_s$) capable of predicting missing data not collected from the location tracking device during the designated intervals through the <Equation 3> and <Equation 4> when the location data of the location tracking device is not collected during the designated intervals.

In operation 1005, an electronic device (e.g., the electronic device 101 of FIG. 1, the electronic device 201 of FIG. 2, and/or the electronic device 201 of FIG. 3) may generate supplementary data corresponding to the missing data based on normalized trajectory data.

According to an embodiment, the electronic device may generate the supplementary data corresponding to the missing data based on the normalized trajectory data using a first artificial intelligence model.

According to an embodiment, the electronic device may, when inputting normalized trajectory data as input data to the first artificial intelligence model, have the first artificial intelligence model generate the supplementary data corresponding to the missing data as result data.

According to an embodiment, a first artificial intelligence model may include at least one of long short-term memory (LSTM) or bi-directional recurrent deep neural network (BRDNN) of a recurrent neural network (RNN) family.

In operation 1007, an electronic device (e.g., the electronic device 101 of FIG. 1, the electronic device 201 of FIG. 2, and/or the electronic device 201 of FIG. 3) may generate the trajectory data including supplementary data as a trajectory image.

According to an embodiment, the electronic device may generate a pixel value of a trajectory connecting first location data ($P_i$) and second location data ($P_{i+1}$) being a next position of the first location data among the trajectory data using the <Equation 5>.

According to an embodiment, the electronic device may generate a trajectory image corresponding to the trajectory data based on a plurality of feature values included in location data and the pixel value.

According to an embodiment, the electronic device may generate at least one trajectory image corresponding to trajectory data for each channel corresponding to at least some values (e.g., an accuracy (acc) value, a speed (sp) value, a signal strength (rssi) value, and a value (mt) indicating a connection method) among the plurality of feature values included in the location data, and generate a final trajectory image by merging the generated at least one trajectory image.

According to an embodiment, the electronic device may non-linearly change the resolution of the trajectory image.

According to an embodiment, the electronic device may change the trajectory image represented in a cartesian coordinate system to a polar coordinate system through the <Equation 6>, calculate an r_u value by distorting a position of the distance (r) from the origin of the polar coordinate system to the coordinate of the trajectory image through the <Equation 7>, and non-linearly change the resolution of the trajectory image by changing the polar coordinate system of the trajectory image back to a cartesian coordinate system through the <Equation 8>.

In operation 1009, an electronic device (e.g., the electronic device 101 of FIG. 1, the electronic device 201 of FIG. 2, and/or the electronic device 201 of FIG. 3) may classify (predict) a category for an object based on a feature extracted from the trajectory image.

According to an embodiment, the electronic device may classify a category for the object based on a feature extracted from the trajectory image using a second artificial intelligence model.

According to an embodiment, a second artificial intelligence model may include a convolutional neural network (CNN).

According to an embodiment , a method of classifying a category of an object using a location tracking device in an electronic device (e.g., the electronic device 101 of FIG. 1 or the electronic device 201 of FIGS. 2 and 3) may include an operation of collecting location data capable of tracking a trajectory of an object from a location tracking device connected through a communication module of the electronic device and attached to the object at designated intervals. According to an embodiment, the method may include an operation of changing a center point of trajectory data including the location data collected at the designated intervals, and normalizing the trajectory data by predicting missing data not collected during the designated intervals. The method according to an embodiment may include an operation of generating supplementary data corresponding to the missing data based on the normalized trajectory data. According to an embodiment, the method may include an operation of generating the trajectory data including the supplementary data as a trajectory image. According to an embodiment, the method may include an operation of classifying a category for the object based on a feature extracted from the trajectory image.

According to an embodiment, the location data may include a plurality of feature values including a timestamp value, a latitude value, a longitude value, an accuracy value, a speed value, a signal strength value, and a value indicating a connection method.

According to an embodiment, the method may further include an operation of changing the center point of the trajectory data to a reference center point, and normalizing the trajectory data by calculating a time vector for predicting missing data not collected from the location tracking device during the designated intervals.

According to an embodiment, the method may further include an operation of generating the supplementary data corresponding to the missing data based on the normalized trajectory data using a first artificial intelligence model.

According to an embodiment, the method may include an operation of generating a pixel value of a trajectory connecting first location data and second location data being a next position of the first location data among the trajectory data, and generating the trajectory image corresponding to the trajectory data based on a plurality of feature values included in the location data and the pixel value. According to an embodiment, the method may further include an operation of non-linearly changing the resolution of the trajectory image.

According to an embodiment, the method may further include an operation of generating the pixel value based on an accuracy value, a speed value, a signal strength value, and a value indicating a connection method among a plurality of feature values included in the second location data.

According to an embodiment, the method may include an operation of generating a plurality of trajectory images based on a plurality of feature values included in each of the location data included in the trajectory data and the pixel value. According to an embodiment, the method may further include an operation of generating the trajectory image by merging the plurality of trajectory images.

According to an embodiment, the method may include an operation of changing a Cartesian coordinate system of the trajectory image to a polar coordinate system. According to an embodiment, the method may further include an operation of distorting a distance value between an origin of the polar coordinate system and a coordinate of the trajectory image, and non-linearly changing the resolution of the trajectory image by changing the polar coordinate system having the distorted distance value to a Cartesian coordinate system.

According to an embodiment, the method may further include an operation of classifying a category for the object based on a feature extracted from the trajectory image using a second artificial intelligence model.

According to an embodiment, the method may include an operation of identifying a category of the object based on a trajectory of a location tracking device attached to the object. According to an embodiment, the method t may further include an operation of providing a function recommendable from the identified category as a recommended function.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in the form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101 or the electronic device 301). For example, a processor (e.g., the processor 520) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101 of FIG. 1; 201 of FIGS. 2 and 3), comprising:

   memory (130 of FIG. 1; 230 of FIG. 3);
   a communication module (190 of FIG. 1; 290 of FIG. 3); and
   a processor (120 of FIG. 1; 220 of FIG. 3), wherein the memory stores instructions configured to, when executed by the processor, cause the electronic device to:

   collect location data capable of tracking a trajectory of an object from a location tracking device connected through the communication module and attached to the object at designated intervals;
   change a center point of trajectory data including the location data collected at the designated intervals, and normalize the trajectory data by predicting missing data not collected during the designated intervals;
   generate supplementary data corresponding to the missing data based on the normalized trajectory data;
   generate the trajectory data including the supplementary data as a trajectory image; and
   classify a category for the object based on a feature extracted from the trajectory image.

2. The electronic device of claim 1, wherein the location data is configured to include a plurality of feature values including a timestamp value, a latitude value, a longitude value, an accuracy value, a speed value, a signal strength value, and a value indicating a connection method.

3. The electronic device of claim 1 or 2, wherein the memory stores instructions configured to, when executed by the processor, cause the electronic device to:

   change the center point of the trajectory data to a reference center point; and
   normalize the trajectory data by calculating a time vector for predicting missing data not collected from the location tracking device during the designated intervals.

4. The electronic device of any one of claims 1 to 3, wherein the memory stores instructions configured to, when executed by the processor, cause the electronic device to:
   generate the supplementary data corresponding to the missing data based on the normalized trajectory data using a first artificial intelligence model.

5. The electronic device of any one of claims 1 to 4, wherein the memory stores instructions configured to, when executed by the processor, cause the electronic device to:

   generate a pixel value of a trajectory connecting first location data and second location data being a next position of the first location data among the trajectory data;
   generate the trajectory image corresponding to the trajectory data based on a plurality of feature values included in the location data and the pixel value; and
   non-linearly change a resolution of the trajectory image.

6. The electronic device of any one of claims 1 to 5, wherein the memory stores instructions configured to, when executed by the processor, cause the electronic device to:
   generate the pixel value based on an accuracy value, a speed value, a signal strength value, and a value indicating a connection method among a plurality of feature values included in the second location data.

7. The electronic device of any one of claims 1 to 6, wherein the memory stores instructions configured to, when executed by the processor, cause the electronic device to:
   generate a plurality of trajectory images based on a plurality of feature values included in each of the location data included in the trajectory data and the pixel value, and generate the trajectory image by merging the plurality of trajectory images.

8. The electronic device of any one of claims 1 to 7, wherein the memory stores instructions configured to, when executed by the processor, cause the electronic device to:

   change a cartesian coordinate system of the trajectory image to a polar coordinate system;
   distort a distance value between an origin of the polar coordinate system and a coordinate of the trajectory image; and
   non-linearly change the resolution of the trajectory image by changing the polar coordinate system having the distorted distance value to a cartesian coordinate system.

9. The electronic device of any one of claims 1 to 8, wherein the memory stores instructions configured to, when executed by the processor, cause the electronic device to:
   classify a category for the object based on a feature extracted from the trajectory image using a second artificial intelligence model.

10. The electronic device of any one of claims 1 to 9, wherein the memory stores instructions configured to, when executed by the processor, cause the electronic device to:

upon identifying a category of the object based on a trajectory of a location tracking device attached to the object, provide a function recommendable from the identified category as a recommended function.

11. A method of classifying a category of an object using a location tracking device in an electronic device, the method comprising:

collecting location data capable of tracking a trajectory of an object from a location tracking device connected through a communication module of the electronic device and attached to the object at designated intervals;

changing a center point of trajectory data including the location data collected at the designated intervals, and normalizing the trajectory data by predicting missing data not collected during the designated intervals;

generating supplementary data corresponding to the missing data based on the normalized trajectory data;

generating the trajectory data including the supplementary data as a trajectory image; and

classifying a category for the object based on a feature extracted from the trajectory image.

12. The method of claim 11, wherein the location data includes a plurality of feature values including a timestamp value, a latitude value, a longitude value, an accuracy value, a speed value, a signal strength value, and a value indicating a connection method.

13. The method of claim 11 or 12, further comprising changing the center point of the trajectory data to a reference center point, and normalizing the trajectory data by calculating a time vector for predicting missing data not collected from the location tracking device during the designated intervals.

14. The method of any one of claims 11 to 13, further comprising generating the supplementary data corresponding to the missing data based on the normalized trajectory data using a first artificial intelligence model.

15. A non-volatile storage medium storing instructions, the instructions being configured to, when executed by an electronic device, cause the electronic device to perform at least one operation, wherein the at least one operation includes:

collecting location data capable of tracking a trajectory of an object from a location tracking device connected through a communication module of the electronic device and attached to the object at designated intervals;

changing a center point of trajectory data including the location data collected at the designated intervals, and normalizing the trajectory data by predicting missing data not collected during the designated intervals;

generating supplementary data corresponding to the missing data based on the normalized trajectory data;

generating the trajectory data including the supplementary data as a trajectory image; and

classifying a category for the object based on a feature extracted from the trajectory image.

FIG. 1

EP 4 757 351 A1

335

Server

215

217

331

SmartTag

213

211

301

201

# FIG. 2

201

220

Processor

Memory ~230

Display ~260

Communication module ~290

# FIG. 3

| a2 | a1 | | a4 |
| p(1) | p(2) | ... | p(i) |
|---|---|---|---|
| 4.72 | nan | 2.2 | nan |
| 50.49 | nan | 27.57 | 10.77 |
| 2.3 | nan | 2.2 | 2.08 |

a3

(a) Time series P

| b2 | b1 | | b4 |
| m(1) | m(2) | ... | m(i) |
|---|---|---|---|
| 1 | 0 | 1 | 0 |
| 1 | 0 | 1 | 1 |
| 1 | 0 | 1 | 1 |

(b) Masking vectors m

b3

| c2 | c1 | | c4 |
| δ(1) | δ(2) | ... | δ(i) |
|---|---|---|---|
| 0 | 2 | 5 | 7 |
| 0 | 2 | 5 | 9 |
| 0 | 2 | 5 | 9 |

c3

(c) Time gap δ

# FIG. 4

# FIG. 5

FIG. 6A

Channel P0      Channel P1      Channel P2      Channel P0+P1+P2

FIG. 6B

711

731

FIG. 7

FIG. 8

Keys

Recommended category
Key 911

Status

Connected

View map

Notify when going away 913

# FIG. 9

START

COLLECT LOCATION DATA CAPABLE OF TRACKING TRAJECTORY OF OBJECT FROM LOCATION TRACKING DEVICE ATTACHED TO OBJECT — 1001

NORMALIZE TRAJECTORY DATA INCLUDING LOCATION DATA COLLECTED AT DESIGNATED PERIOD — 1003

GENERATE SUPPLEMENTARY DATA CORRESPONDING TO MISSING DATA BASED ON NORMALIZED TRAJECTORY DATA — 1005

GENERATE TRAJECTORY DATA INCLUDING SUPPLEMENTARY DATA AS TRAJECTORY IMAGE — 1007

CLASSIFY CATEGORY FOR OBJECT BASED ON FEATURE EXTRACTED FROM TRAJECTORY IMAGE — 1009

END

FIG. 10

# EP 4 757 351 A1

<table>
<tr><td colspan="2"><b>INTERNATIONAL SEARCH REPORT</b></td><td colspan="2">International application No.<br><b>PCT/KR2024/012547</b></td></tr>
</table>

<table>
<tr><td colspan="4"><b>A. CLASSIFICATION OF SUBJECT MATTER</b><br><br><b>H04W 4/029</b>(2018.01)i; <b>H04W 4/80</b>(2018.01)i; <b>H04W 4/02</b>(2009.01)i; <b>G06T 7/20</b>(2006.01)i; <b>G06N 3/0442</b>(2023.01)i;<br><b>G06N 3/0464</b>(2023.01)i; <b>G08B 21/02</b>(2006.01)i<br><br>According to International Patent Classification (IPC) or to both national classification and IPC</td></tr>
<tr><td colspan="4"><b>B. FIELDS SEARCHED</b></td></tr>
<tr><td colspan="4">Minimum documentation searched (classification system followed by classification symbols)<br><br>H04W 4/029(2018.01); A01K 11/00(2006.01); A01K 29/00(2006.01); G01C 21/26(2006.01); G06K 9/00(2006.01);<br>G06N 3/0455(2023.01); G08B 13/196(2006.01); G08B 21/02(2006.01); G09B 29/00(2006.01)</td></tr>
<tr><td colspan="4">Documentation searched other than minimum documentation to the extent that such documents are included in the fields searched<br><br>Korean utility models and applications for utility models: IPC as above<br>Japanese utility models and applications for utility models: IPC as above</td></tr>
<tr><td colspan="4">Electronic data base consulted during the international search (name of data base and, where practicable, search terms used)<br><br>eKOMPASS (KIPO internal) & keywords: 궤적(track), 위치(location), 결측 데이터(missing data), 객체(object), 정규화 (normalization), 카테고리(category)</td></tr>
</table>

<table>
<tr><td colspan="4"><b>C. DOCUMENTS CONSIDERED TO BE RELEVANT</b></td></tr>
<tr><td>Category*</td><td colspan="2">Citation of document, with indication, where appropriate, of the relevant passages</td><td>Relevant to claim No.</td></tr>
<tr><td>A</td><td colspan="2">JP 2019-211793 A (MICWARE CO., LTD. et al.) 12 December 2019 (2019-12-12)<br>See paragraph [0022]; and claim 1.</td><td>1-15</td></tr>
<tr><td>A</td><td colspan="2">KR 10-1954877 B1 (KIM, Kyung Won) 06 March 2019 (2019-03-06)<br>See paragraphs [0034]-[0150]; and figures 1-12.</td><td>1-15</td></tr>
<tr><td>A</td><td colspan="2">KR 10-2539679 B1 (PEOPULLEY INC.) 02 June 2023 (2023-06-02)<br>See paragraphs [0031]-[0157]; and figures 1-9.</td><td>1-15</td></tr>
<tr><td>A</td><td colspan="2">US 2019-0110441 A1 (NMODE SOLUTIONS, INC.) 18 April 2019 (2019-04-18)<br>See paragraphs [0027]-[0059]; and figures 1-6.</td><td>1-15</td></tr>
<tr><td>A</td><td colspan="2">KR 10-2265951 B1 (PINTEL CO., LTD.) 17 June 2021 (2021-06-17)<br>See paragraphs [0024]-[0053]; and figures 1-7.</td><td>1-15</td></tr>
</table>

☐ Further documents are listed in the continuation of Box C.　　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 November 2024** | **25 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012547**

| Patent document cited in search report | | | Publication date (day/month/year) | Patent family member(s) | | | Publication date (day/month/year) |
|---|---|---|---|---|---|---|---|
| JP | 2019-211793 | A | 12 December 2019 | JP | 7039536 | B2 | 22 March 2022 |
| KR | 10-1954877 | B1 | 06 March 2019 | JP | 2020-061123 | A | 16 April 2020 |
| | | | | JP | 6723420 | B2 | 15 July 2020 |
| | | | | US | 10492033 | B1 | 26 November 2019 |
| KR | 10-2539679 | B1 | 02 June 2023 | | None | | |
| US | 2019-0110441 | A1 | 18 April 2019 | US | 10292370 | B2 | 21 May 2019 |
| | | | | US | 10798920 | B2 | 13 October 2020 |
| | | | | US | 2013-0340305 | A1 | 26 December 2013 |
| | | | | US | 2016-0198680 | A1 | 14 July 2016 |
| KR | 10-2265951 | B1 | 17 June 2021 | | None | | |

Form PCT/ISA/210 (patent family annex) (July 2022)